# EUROPEAN PATENT SPECIFICATION

(11) **EP 0 410 807 B1**
(45) Date of publication and mention of the grant of the patent: **11.01.1995**
(21) Application number: 90308299.8
(22) Date of filing: 27.07.1990
(51) Int. Cl.: A01D 33/04, A01D 17/06, B07B 1/15

(54) **Agricultural separator**
Landwirtschaftliches Trennungsgerät
Séparateur agricole

(30) Priority: 28.07.1989 GB 8917291; 28.07.1989 GB 8917292
(43) Date of publication of application: 30.01.1991
(73) Proprietor: RICHARD PEARSON LIMITED, Boston, Lincolnshire PE22 0JZ (GB)
(72) Inventor: Needham, Timothy, Boston, Lincolnshire, PE22 0JZ (GB); Weston, David, Boston, Lincolnshire, PE22 0JZ (GB); Grimme, Franz, Jr., D-2845 Damme (DE)
(74) Representative: Devons, David Jon

(56) References cited:
- GB-A- 2 145 612
- GB-A- 2 222 507
- GB-B- 878 492
- US-D- 4 871 073

## Description

The present invention relates to an agricultural separator.

Conventional agricultural separators, e. g. stone and clod separators, usually comprise two webs having spaced laterally-extending bars. The size of sieving is determined by the distance between the bars. The maximum distance between the bars is about 50mm. Stones, clods and soil having a smaller size fall between the bars and are returned directly to the ground, i.e. to the sowing area directly beneath, since objects of this size are acceptable.

GB-A-2 145 612 discloses a device for separating clod or stones from root vegetables or bulbs in which a rotatable member having a row of axially-spaced starwheels having angularly-spaced flexible fingers is arranged adjacent a counter-rotating clod roller. A similar upstream rotatable member is provided with the starwheels of the adjacent rotatable members overlapping to provide cleaning of the starwheels.

From GB-A-878 492 it is known to provide a crop grading machine with pairs of axially spaced rollers having circumferential resilient ribs. The ribs of adjacent rollers are in alignment so that separation takes place in the rectangular openings between the ribs. The circumferential spacing between ribs of adjacent rollers is not sufficient to provide separation. Such a machine would not operate satisfactorily where the soil is sticky or wedge-shaped stones occur.

An object of the present invention is to provide an agricultural separator, which when used as a stone and clod separator, will provide a better degree of separation combined with crushing of clods to increase the quantity of acceptable material returned to the sowing area, and may also be used as a grader.

The invention provides an agricultural separator as claimed in claim 1.

Thus three different sizes of objects may be separated, i.e. small particles, e.g. soil and small stones, large stones and clods, and boulders, the latter being passed on by the third rotatable member.

An embodiment of the invention will now be described with reference to the accompanying drawings, wherein:
Fig. 1 shows diagrammatically a stone and clod separator in side view,
Fig. 2 is a side view of two of the rotatable members of Fig. 1, and
Fig. 3 is a plan view of the rotatable members of Fig. 2.

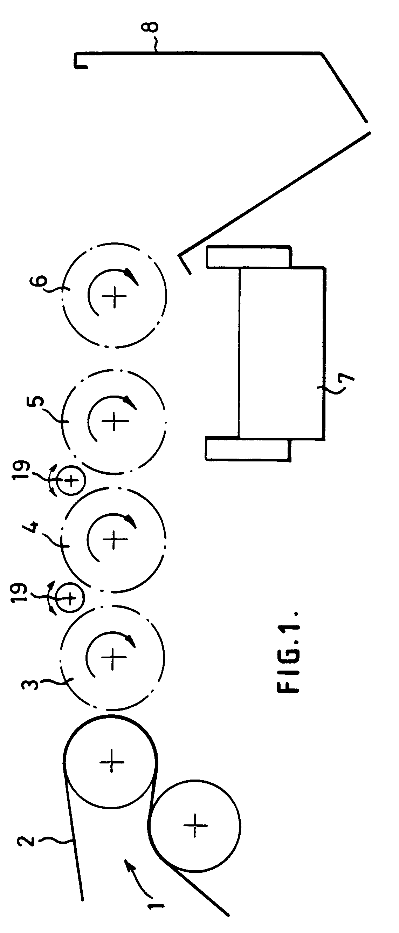

In Fig. 1 a stone and clod separator comprises a lifting conveyor 1 in the form of a web 2 in which stone and clod lifted from the ground is conveyed upwardly. The conveyor 1 is provided with agitators (not shown) so that clod is broken up, and soil particles fall through the web 2 to be returned to the ground (see for example GB 2 145 612B).

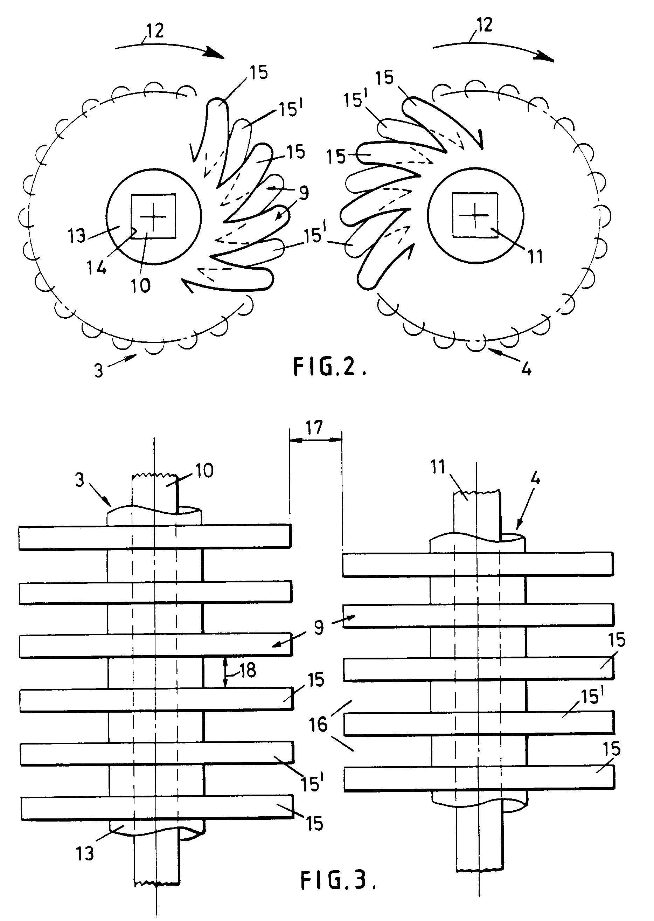

Downstream of the lifting conveyor 1 are four rotatable members 3, 4, 5 and 6, each comprising a driven shaft carrying a plurality of axially-spaced starwheels separated by spacers. The rotatable members 3 and 4 are shown in greater detail in Figs. 2 and 3.

The spacing between the rotatable members 3, 4 and 5 is equal and is sufficiently small so that only clods and stones of up to approximately 50mm are carried down between the starwheels. The spacing between the rotatable members 5 and 6 may be somewhat larger, e.g. up to 200mm, but will normally be about 150mm, so that medium sized stones and clods are drawn down therebetween to fall onto a lateral conveyor 7 to deposit these stones and clods laterally of the separator, e.g. into a trench in the ground. Alternatively, the spacing between the rotatable members 5 and 6 need be no larger than that between the rotatable members 3, 4 and 5, but the axial spacing between the starwheels is greater to allow the larger stones to fall through.

Preferably, the starwheels of the rotatable members 3 to 6 have a larger diameter than known starwheels (about 16cm), e.g. from 20 to 30cm, preferably 25cm.

A trough 8 is arranged downstream of the rotatable member 6 for receiving objects passed on by the rotatable member 6, i.e. still larger stones and small boulders. The trough 8 may be arranged for easy emptying. e.g. by pivoting.

In Figs. 2 and 3 the rotatable members 3, 4 each comprise a plurality of starwheels 9 mounted on parallel shafts 10, 11 drivingly rotatable in the same direction as shown by arrows 12. Each starwheel 9 has a central spacer bush 13 with a shaped axial bore 14 and a plurality of resilient angularly-spaced fingers 15 extending from the bush 13. The fingers are curved slightly in a rearward direction, i.e. their leading edges are convex and their trailing edges are concave. The fingers 15 are known as "parrot-beak" shaped.

From Fig. 2 it will be seen that the pitch of adjacent starwheels 9 on each shaft 10, 11 is slightly staggered, so that a finger 15′ of a starwheel is aligned in an axial direction with the gap between the adjacent fingers 15 of the adjacent starwheel. Thus, the horizontal angularly-spaced gaps normally extending between the fingers of aligned starwheels are blocked by the fingers 15′ of alternate starwheels. As a result of this arrangement, the fingers 15, 15′ form helically-shaped rows around the axis. This ensures that, in use, slightly larger objects, which might fall into the gaps formed by aligned starwheels, are carried over.

The staggering of the pitch of the starwheels 9 is simply achieved by altering the pitch of the central bore 14. Thus, two sets of starwheels are formed in which the pitch of the bore 14 for each set differs by half the angular distance between adjacent fingers 15.

The bore 14 is preferably square shaped as shown, but could have any other suitable shape.

As can be seen from Fig. 3, the rotatable members 3, 4 are axially staggered so that the fingers 15, 15′ of rotatable member 3 are aligned with the gaps 16 between the starwheels of the other rotatable member 4.

In use, the material flowing over the rotatable members is rotated in the gap 17 therebetween both against the flow of material (i.e. anticlockwise) and also from side to side by the action of the fingers 15 of the starwheels 9. This facilitates the separation of irregularly-shaped objects. For example, wedge-shaped stones, instead of being jammed between the rotatable members 3 and 4, tend to "climb" upwardly and are passed on until the gap 17 between the rotatable members corresponds to the size of the wedge-shaped article which then falls through. Larger objects are of course carried on further to fall through the appropriate larger gap 17.

For optimum separation the starwheels of the rotatable members 3 and 4 have twelve flexible fingers, whereas the starwheels of the rotatable members 5 and 6 have only six flexible fingers. The starvheels of the rotatable member 5 are spaced by a distance 18 such that the spacing between centres is from 4 to 8cm, preferably 4.5cm, whereas the equivalent spacing for the starwheels of the rotatable member 6 is from 8 to 16cm, preferably 9cm.

The rotatable members 3, 4, 5 and 6 are each driven and rotate in the same direction (here, clockwise) to advance the objects being separated (here, from left to right). Preferably, each rotatable member is provided with a double sprocket, and drive is provided via suitable gearing by a motor (not shown). Conveniently, the motor drives the rotatable member 3, which then drives the rotatable member 4 via suitable gearing or chains, and so on to the rotatable member 6.

If desired, the first and second rotatable members 3 and 4 may each be provided with a respective removable smooth-surface roller 19, e.g. of steel, rubber or plastics material. The direction of rotation of the steel rollers is reversible. When the steel rollers 9 are driven in the same direction as the rotatable members 3 and 4, i.e. clockwise, material is passed thereover, and there is no crushing of the material. However, if the steel rollers 19 are driven in the opposite direction to the rotatable members 3 and 4, i.e. anti-clockwise, material is drawn between the rotatable members 3 and 4 and the respective steel roller 19 so that the material, i.e. clods, is crushed. Depending on the composition of the material being separated, the direction of rotation of the steel rollers 19 may be reversed, or the rollers 19 may be removed altogether.

By using the above-described separator three different sizes are separated, i.e. the soil and small stones, which are returned to the ground, the larger stones and clods, which are returned to the ground laterally of the row being prepared for sowing, and the still larger stones and boulders which are removed altogether.

It will be seen that the four rotatable members 3, 4, 5 and 6 act both as a horizontal conveyor and as separators.

The separation between the rotatable members 3 and 4 is very similar to the separation between the rotatable members 4 and 5. Therefore, the rotatable member 3 is not essential, and may be omitted. The three rotatable members 4, 5 and 6 will still provide three-sizes separation.

Clearly, the number of rotatable members may be greater than four. Further suitable rotatable members may be inserted upstream, downstream, or even between the rotatable members 3, 4, 5 and 6.

The above-described stone and clod separator could be used as a grader for root-crops or bulbs, either as an in-store grader, or incorporated in a harvester, e.g. in a potato harvester.

When used as a grader, e.g. a potato grader, the material separated onto the conveyor 7 would not be returned to the ground, but would be bagged, and the extra large potatoes would be collected in the trough 8.

By replacing every alternate one, two or more starwheels 9 with a spacer bush, the gap 16 may be increased so that still larger objects can be graded, e.g. larger swedes or turnips.

A grader may be set up incorporating any desired number, e.g. ten, rotatable members with the spacing therebetween adjusted to provide the required grading. The gap 17 between the adjacent rows increases in the direction of rotation of the starwheels 9, and hence in the direction of travel of the objects being graded. The gap increase need not occur between each row of starwheels but may be in stages. Thus, the gap 17 may be constant over two or three gaps and then be increased for the next two or three gaps. This ensures that the maximum extraction of objects of the correct size is achieved at each stage.

The grader may be used for other root crops, such as carrots, onions, turnips etc., for bulbs, and also for certain fruits, such as gooseberries. However, when used with crops having delicate skins, e.g. new potatoes, a steel roller 19 should be provided between all the rotatable members 3 to 6, and would be driven in the same direction. Thus, the potatoes carried over by one rotatable member, say 3, would pass over the immediately downstream roller 19. They would then either pass over the next rotatable member 4, or would fall down between the roller 19 and the rotatable member 4, and then down between the rotatable members 3 and 4 to be graded out.

Although the difference in spacing between the rotatable members 4, 5, 6, i.e. the difference in size of the gap 17, has been achieved in Fig. 1 by varying the distance between the centres of the rotatable members, it would be possible to achieve the same effect by maintaining the same distance between the centres of the rotatable members and altering the position and/or the diameter of the smooth-surface roller(s) 19. Thus, in Fig. 1 each roller 19 could be slidable in a respective slot in opposite side walls to vary the gap between the roller 19 and the respective, immediately-downstream rotatable member 4, 5.

If small root crop returned to the ground during harvesting is to be retrieved (e.g. for marketing, or to prevent weeding) this can be done by using an upstream rotatable member or members having starwheels with more than 15 fingers, preferably 18, or even more fingers. Preferably, the gap between the fingers of adjacent starwheels is 13-16mm. Thus, root crop, e.g. potatoes, down to 2cm will be retrieved and smaller particles will be separated out.

## Claims

1. An agricultural separator for separating material into small size particles and intermediate and large size objects respectively, comprising three spaced rotatable members (4, 5, 6) each comprising a row of axially-spaced starwheels (9) having angularly-spaced resilient fingers (15), characterised in that there is a permanent circumferential spacing between the rotatable members (4, 5, 6) so that they do not intermesh and that the spacing between the first and second rotatable members (4, 5) and the spacing between the starwheels (9) thereof is sufficiently small to allow the small size particles to pass therethrough for return to the ground, and the spacing between the second and third rotatable members (5, 6) and/or the spacing between the starwheels of the third rotatable member is sufficiently large to separate out the intermediate size objects downwardly therebetween for removal laterally of the separator.

2. An agricultural separator as claimed in claim 1, wherein a transverse conveyor (7) is arranged beneath the spacing between the second and third rotatable members (5, 6) for removal of the objects falling therethrough.

3. An agricultural separator as claimed in claim 1 or 2, wherein collecting means (8) are provided downstream of the third rotatable member (6) to collect the large size objects passed on by the third rotatable member.

4. An agricultural separator as claimed in claim 3, wherein the collecting means comprise a hopper (8).

5. An agricultural separator as claimed in any one of the preceding claims, wherein the starwheels (9) of the first rotatable member (4) each have 12 resilient fingers (15).

6. An agricultural separator as claimed in any one of the preceding claims, wherein the starwheels (9) of the second and third rotatable members (5, 6) each have six resilient fingers (15).

7. An agricultural separator as claimed in any one of the preceding claims, wherein the starwheels (9) are replaceable by spacers for varying the spacing (18) of the starwheels (9) on the rotatable members (4, 5, 6).

8. An agricultural separator as claimed in any one of the preceding claims, wherein when used as a stone and clod separator the spacing between centres of the starwheels (9) of the second rotatable member (5) is from 4 to 8cm, preferably 4.5cm.

9. An agricultural separator as claimed in claim 8, wherein the spacing between centres of the starwheels (9) on the third rotatable member (6) is from 8 to 16cm, preferably 9cm.

10. An agricultural separator as claimed in any one of the preceding claims, wherein the distance (17) between the rotatable members (3-6) is adjustable to vary the size of material falling therebetween.

11. An agricultural separator as claimed in any one of the preceding claims wherein at least the first rotatable member (4) is provided with a reversible roller (19) for facilitating or hindering the crushing of objects being conveyed.

12. An agricultural separator as claimed in claim 11, wherein the reversible roller (19) is removable.

13. An agricultural separator as claimed in any one of the preceding claims, wherein one or more further rotatable members (3) are provided upstream and/or downstream of the three rotatable members (4, 5, 6), and comprise rows of axially-spaced starwheels (9) having angularly-spaced resilient fingers (15).

## Patentansprüche

1. Landwirtschaftliches Trenngerät zum Trennen von Material in Partikel von kleiner Größe und in Objekte von mittlerer und großer Größe, das drei mit Zwischenraum angeordnete, drehbare Elemente (4, 5, 6) aufweist, von denen jedes eine Reihe von mit axialem Zwischenraum angeordneten Sternrädern (9) aufweist, die mit Winkel-Zwischenraum angeordnete, elastische Finger (15) haben, dadurch gekennzeichnet, daß ein dauernder Umfangs-Zwischenraum zwischen den drehbaren Elementen (4, 5, 6) vorhanden ist, so daß sie nicht ineinandergreifen, und daß der Zwischenraum zwischen dem ersten und zweiten drehbaren Element (4, 5) und der Zwischenraum zwischen ihren Sternrädern (9) klein genug ist, um nur die Partikel von kleiner Größe hindurchfallen zu lassen, damit sie wieder auf den Erdboden zurückfallen, und der Zwischenraum zwischen dem zweiten und dritten drehbaren Element (5, 6), und/oder der Zwischenraum zwischen den Sternrädern des dritten drehbaren Elements (6) groß genug ist, um die Objekte von mittlerer Größe dazwischen nach unten fallen zu lassen, damit sie aus dem Trenngerät seitlich herausgenommen werden können.

2. Landwirtschaftliches Trenngerät gemäß Anspruch 1, bei dem ein Querförderer (7) unterhalb des Zwischenraums zwischen dem zweiten und dritten drehbaren Element (5, 6) angeordnet ist, um die hindurchfallenden Objekte abzutransportieren.

3. Landwirtschaftliches Trenngerät gemäß Anspruch 1 oder 2, bei dem stromabwärts von dem dritten drehbaren Element (6) Aufnahmemittel (8) vorgesehen sind, um die von dem dritten drehbaren Element weiterbeförderten Objekte von großer Größe aufzunehmen.

4. Landwirtschaftliches Trenngerät gemäß Anspruch 3, bei dem die Aufnahmemittel einen Fülltrichter (8) aufweisen.

5. Landwirtschaftliches Trenngerät gemäß irgendeinem der vorhergehenden Ansprüche, bei dem die Sternräder (9) des ersten drehbaren Elements (4) je 12 elastische Finger (15) haben.

6. Landwirtschaftliches Trenngerät gemäß irgendeinem der vorhergehenden Ansprüche, bei dem die Sternräder (9) des zweiten und dritten drehbaren Elements (5, 6) je sechs elastische Finger (15) haben.

7. Landwirtschaftliches Trenngerät gemäß irgendeinem der vorhergehenden Ansprüche, bei dem die Sternräder (9) durch Abstandsstücke ersetzbar sind, um den Zwischenraum (18) der Sternräder (9) bei den drehbaren Elementen (4, 5, 6) zu verändern.

8. Landwirtschaftliches Trenngerät gemäß irgendeinem der vorhergehenden Ansprüche, bei dem im Falle der Verwendung als Stein- und Klumpentrenner der Mittenabstand der Sternräder (9) bei dem zweiten drehbaren Element (5) 4 bis 8 cm, vorzugsweise 4,5 cm beträgt.

9. Landwirtschaftliches Trenngerät gemäß Anspruch 8, bei dem der Mittenabstand der Sternräder (9) bei dem dritten drehbaren Element (6) 8 bis 16 cm, vorzugsweise 9 cm beträgt.

10. Landwirtschaftliches Trenngerät gemäß irgendeinem der vorhergehenden Ansprüche, bei dem der Abstand (17) zwischen den drehbaren Elementen (3-6) einstellbar ist, um die Größe des dazwischen hindurchfallenden Materials zu verändern.

11. Landwirtschaftliches Trenngerät gemäß irgendeinem der vorhergehenden Ansprüche, bei dem mindestens das erste drehbare Element (4) mit einer umkehrbaren Rolle (19) versehen ist, um das Zerquetschen der geförderten Objekte zu erleichtern oder zu verhindern.

12. Landwirtschaftliches Trenngerät gemäß Anspruch 11, bei dem die umkehrbare Rolle (19) abnehmbar ist.

13. Landwirtschaftliches Trenngerät gemäß irgendeinem der vorhergehenden Ansprüche, bei dem ein oder mehr weitere drehbare Elemente (3) stromaufwärts und/oder stromabwärts von den drei drehbaren Elementen (4, 5, 6) vorgesehen sind, und Reihen von mit axialem Zwischenraum angeordneten Sternrädern (9) aufweisen, die mit Winkel-Zwischenraum angeordnete elastische Finger (15) haben.

## Revendications

1. Un séparateur agricole pour séparer respectivement du matériau en particules de petite taille ainsi que des objets de taille intermédiaire et grande, comprenant trois éléments rotatifs espacés (4, 5, 6), comportant chacun une rangée de roues en étoile espacées axialement (9), possédant des doigts résilients espacés angulairement (15), caractérisé en ce qu'il existe un espacement circonférentiel permanent entre les éléments rotatifs (4, 5, 6), de sorte qu'ils ne s'engrènent pas, l'espacement entre les premier et deuxième éléments rotatifs (4, 5) et l'espacement entre les roues en étoile correspondantes (9) étant suffisamment petit pour permettre le passage de particules de petite taille en vue de leur retour au sol, l'espacement entre les deuxième et troisième éléments rotatifs (5, 6) et/ou l'espacement entre les roues en étoile du troisième élément rotatif étant suffisamment grands pour séparer les objets de taille intermédiaire et les faire passer vers le bas entre eux pour les éliminer latéralement du séparateur.

2. Un séparateur agricole selon la revendication 1, dans lequel un transporteur transversal (7) est agencé au-dessous de l'espacement entre les deuxième et troisième éléments rotatifs (5, 6) en vue de l'élimination des objets retombant à travers celui-ci.

3. Un séparateur agricole selon les revendications 1 ou 2, dans lequel des moyens collecteurs (8) sont agencés en aval du troisième élément rotatif (6) pour collecter les objets de grande taille transférés par le troisième élément rotatif.

4. Un séparateur agricole selon la revendication 3, dans lequel les moyens collecteurs comprennent une trémie (8).

5. Un séparateur agricole selon l'une quelconque des revendications précédentes, dans lequel les roues en étoile (9) du premier élément rotatif (4) possèdent chacune 12 doigts résilients (15).

6. Un séparateur agricole selon l'une quelconque des revendications précédentes, dans lequel les roues en étoile (9) des deuxième et troisième éléments rotatifs (5, 6) possèdent chacune six doigts résilients (15).

7. Un séparateur agricole selon l'une quelconque des revendications précédentes, dans lequel les roues en étoile (9) peuvent être remplacées par des pièces d'écartement, pour faire varier l'espacement (18) des roues en étoile (9) sur les éléments rotatifs (4, 5, 6).

8. Un séparateur agricole selon l'une quelconque des revendications précédentes, dans lequel, en cas de son utilisation comme séparateur de pierres et de mottes de terre, l'espacement entre les centres des roues en étoile (9) du deuxième élément rotatif (5) est compris entre 4 et 8 cm et correspond de préférence à 4,5 cm.

9. Un séparateur agricole selon la revendication 8, dans lequel l'espacement entre les centres des roues en étoile (9) sur le troisième élément rotatif (6) est compris entre 8 et 16 cm et correspond de préférence à 9 cm.

10. Un séparateur agricole selon l'une quelconque des revendications précédentes, dans lequel la distance (17) entre les éléments rotatifs (3 à 6) peut être ajustée pour faire varier la taille du matériau retombant entre ceux-ci.

11. Un séparateur agricole selon l'une quelconque des revendications précédentes, dans lequel au moins le premier élément rotatif (4) comporte un rouleau réversible (19) servant à faciliter ou à gêner le broyage des objets transportés.

12. Un séparateur agricole selon la revendication 11, dans lequel le rouleau réversible (19) est amovible.

13. Un séparateur agricole selon l'une quelconque des revendications précédentes, dans lequel un ou plusieurs éléments rotatifs supplémentaires (3) sont agencés en amont et/ou en aval des trois éléments rotatifs (4, 5, 6) et comprennent des rangées de roues en étoile espacées axialement (9), possédant des doigts résilients espacés angulairement (15).
